# EUROPÄISCHE PATENTSCHRIFT

(11) **EP 4 406 635 B1**
(45) Veröffentlichungstag und Bekanntmachung des Hinweises auf die Patenterteilung: **30.07.2025**
(21) Anmeldenummer: 24154493.1
(22) Anmeldetag: 29.01.2024
(51) Int. Cl.: B01D 24/46, B01D 29/66

(54) **VORRICHTUNG UND VERFAHREN ZUM ERZEUGEN EINES DRUCKLUFTIMPULSES**
DEVICE AND METHOD FOR GENERATING A COMPRESSED AIR PULSE
DISPOSITIF ET PROCÉDÉ DE PRODUCTION D'UNE IMPULSION D'AIR COMPRIMÉ

(30) Priorität: 30.01.2023 DE 102023102188
(43) Veröffentlichungstag der Anmeldung: 31.07.2024
(73) Patentinhaber: TAPROGGE GmbH, 58300 Wetter (DE)
(72) Erfinder: Trostmann, Dirk, 58300 Wetter (DE); Gille, Detlef, 58285 Gevelsberg (DE)
(74) Vertreter: Kalkoff & Partner Patentanwälte mbB

(56) Entgegenhaltungen:
- WO-A1-2021/224179
- CN-A- 105 417 594
- GB-A- 779 443
- US-A1- 2009 218 285

## Beschreibung

Die Erfindung betrifft eine Vorrichtung und ein Verfahren zum Erzeugen eines Druckluftimpulses sowie ein System zum Spülen einer Filtereinheit.

Ein Druckluftimpuls kann insbesondere zu Reinigungszwecken verwendet werden. Bspw. ist es bekannt, Filter durch einen Druckluftimpuls zu reinigen, insbesondere durch einen entgegen der Filterrichtung gerichteten Druckluftimpuls. Eine besondere Anwendung der Erfindung betrifft das Spülen von unterhalb einer Flüssigkeitsoberfläche, insbesondere einer Wasseroberfläche angeordneten Filtereinheiten zum Entfernen von Verunreinigungen und Blockaden der Filtereinheit.

Die DE10024930A1 beschreibt ein Verfahren und eine Vorrichtung zum Verdichten von Formstoffen, z. B. Gießereiformsand innerhalb einer geschlossenen Formkammer durch die kinetische Energie eines Vielstempel-Preßimpulses, der wahlweise durch einen synchronen Druckluftimpuls und/oder durch einen dem Verdichtungsvorgang vorgeschalteten Fluidisierungsluftstrom ergänzt werden kann. Pneumatisch angetriebene Preßstempel sind in einem Zylinderblock angeordnet und werden vom Druckluftfreistrahl einer Lavaldüse beschleunigt. Der Druckluftimpuls wird von in der Bodenplatte angeordneten Lavaldüsen ausgelöst und über Kanäle in die Formkammer geleitet.

Zum Spülen einer Filtereinheit unterhalb einer Wasseroberfläche ist eine Vorrichtung zum Erzeugen eines Druckluftimpulses mit einem üblicherweise entfernt angeordneten Druckluftbehälter bekannt. Die Filtereinheit wird im Filterbetrieb in Strömungsrichtung von einem Einlass bis zu einem Auslass mit einer Flüssigkeit, beispielsweise Meerwasser durchströmt, wobei Verunreinigungen, z.B. Algen oder Unrat an einer Filterfläche haften und den Durchfluss der Flüssigkeit durch die Filtereinheit einschränken. Zum Spülen der Filtereinheit wird der Druckluftimpuls entgegen der Strömungsrichtung der Flüssigkeit abgegeben.

Es kann als Aufgabe angesehen werden, eine Vorrichtung, ein Verfahren sowie ein System bereitzustellen, die auf einfache und zuverlässige Weise einen Druckluftimpuls erzeugen können, insbesondere auch bei größerer Entfernung zwischen einer Druckluftquelle und dem Ort der Wirkung des Druckluftimpulses.

Die Aufgabe wird gelöst durch eine Vorrichtung zum Erzeugen eines Druckluftimpulses gemäß Anspruch 1 und ein System zum Spülen einer Filtereinheit gemäß Anspruch 13 sowie ein Verfahren gemäß Anspruch 14. Abhängige Ansprüche beziehen sich auf vorteilhafte Ausführungsformen der Erfindung.

Erfindungsgemäß weist die Vorrichtung zum Erzeugen eines Druckluftimpulses einen über eine Zuführleitung mit Druckluft befüllbaren Druckluftbehälter und ein Auslassventil zum Abgeben des Druckluftimpulses über einen Ausgang auf. Weiter weist die Vorrichtung einen pneumatischen Antrieb zum Öffnen und Schließen des Auslassventils auf. Der Antrieb ist erfindungsgemäß zum Öffnen und Schließen des Auslassventils mittels der in dem Druckluftbehälter vorhandenen Druckluft antreibbar.

Die Erfinder haben erkannt, dass sich die im Druckluftbehälter vorhandene und/oder gespeicherte Druckluft sowohl zum Abgeben des Druckluftimpulses als auch zum Antreiben des pneumatischen Antriebs einsetzen lässt. Hierdurch wird eine effiziente und kompakte Vorrichtung bereitgestellt, die insbesondere über eine entfernt zu dem Druckluftbehälter angeordnete Druckluftquelle, beispielsweise einen Kompressor befüllbar ist und kurzfristig zum Erzeugen eines Druckluftimpulses einsatzbereit ist. Auch ein langsames Füllen des Druckluftbehälters, also des Energiespeichers am Ort der Wirkung des Druckluftimpulses, wird vorteilhaft ermöglicht, wobei der Druckluftimpuls insbesondere schlagartig, beispielsweise zum Spülen einer Filtereinheit erzeugt werden kann.

Die Zuführleitung ist zum Befüllen des Druckluftbehälters derart gebildet, dass die Druckluft von einem Drucklufterzeuger, beispielsweise einem Kompressor, zum Druckluftbehälter transportiert wird. Das Auslassventil und der pneumatische Antrieb sind bevorzugt an dem Druckluftbehälter angeordnet. Das Auslassventil ist derart mit dem Ausgang verbunden, dass beim Öffnen des Auslassventils ein Druckluftimpuls über den Ausgang abgegeben wird. Hierbei wird unter einem Druckluftimpuls eine einstellbare Menge der in dem Druckluftbehälter gespeicherten Druckluft verstanden.

Der pneumatische Antrieb ist derart mit dem Druckluftspeicher verbunden, dass die in dem Druckluftbehälter gespeicherte Druckluft zum Antreiben des pneumatischen Antriebs verwendet wird. Ferner ist der pneumatische Antrieb vorzugsweise derart mit dem Auslassventil verbunden, dass ein Beaufschlagen des Antriebs mit der in dem Druckluftbehälter gespeicherten Druckluft ein Öffnen und/oder Schließen des Auslassventils zum Erzeugen des Druckluftimpulses bewirkt.

Das System zum Spülen einer in einer Strömungsrichtung von einem Einlass bis zu einem Auslass mit einer Flüssigkeit durchströmten Filtereinheit weist neben der vorstehend beschriebenen Vorrichtung zum Erzeugen eines gegen die Strömungsrichtung der Flüssigkeit gerichteten Druckluftimpulses eine, vorzugsweise unterhalb einer Wasseroberfläche, angeordnete Filtereinheit auf. Die Filtereinheit weist mindestens eine Filterfläche zum Trennen von Verunreinigungen, z.B. Algen, Dreck oder Unrat, von dem Flüssigkeitsstrom auf. Durch den mittels der erfindungsgemäßen Vorrichtung erzeugten und gegen die Strömungsrichtung der Flüssigkeit gerichteten Druckluftimpuls wird die Filtereinheit auf einfache und zuverlässige Weise von auf der Filterfläche haftenden Verunreinigungen befreit.

Bei dem Verfahren zum Erzeugen eines Druckluftimpulses wird der Druckluftbehälter über die Zuführleitung mit Druckluft befüllt und das Auslassventil zum Ablassen der Druckluft über den Ausgang, insbesondere an eine Filtereinheit, durch den pneumatischen Antrieb für einen vorgebbaren Zeitraum geöffnet. Zum Öffnen und Schließen des Auslassventils wird der pneumatische Antrieb mittels der in dem Druckluftbehälter vorhandenen Druckluft angetrieben.

Zum Abgeben des Druckluftimpulses kann das Auslassventil grundsätzlich beliebig gebildet sein. Besonders bevorzugt ist das Auslassventil jedoch zwischen einer den Druckluftimpuls abgebenden Öffnungsstellung und einer die Abgabe von Druckluft blockierenden Schließstellung verstellbar, bspw. drehbar. Das Auslassventil kann bspw. ein Absperrventil sein. In der Öffnungsstellung ist ein Durchfluss der in dem Druckluftbehälter vorhandenen Druckluft durch das Auslassventil zum Erzeugen des Druckluftimpulses über den Ausgang freigegeben. In der Schließstellung ist ein Durchfluss der Druckluft durch das Auslassventil blockiert und/oder verhindert. Bevorzugt ist der pneumatische Antrieb über ein Rotationselement mit dem Auslassventil verbunden, wobei das Verstellen des Auslassventils zwischen der Schließstellung und der Öffnungsstellung oder umgekehrt besonders bevorzugt über eine Rotationsbewegung des Rotationselements bewirkt wird. Hierzu ist das Rotationselement vorzugsweise über den mittels der in dem Druckluftbehälter gespeicherten Druckluft angetriebenen pneumatischen Antrieb antreibbar.

Nach einer vorteilhaften Weiterbildung der Erfindung ist vorgesehen, dass der pneumatische Antrieb in Richtung auf die Schließstellung vorgespannt, bevorzugt federvorgespannt ist. Bevorzugt weist der pneumatische Antrieb mindestens ein Federelement zum Vorspannen des Antriebs in Richtung auf die Schließstellung auf. Indem der Antrieb auf die Schließstellung vorgespannt, insbesondere federvorgespannt ist, kann auf vorteilhafte Weise auf ein durch Druckluft bewirktes Verstellen des Auslassventils von der Öffnungsstellung auf die Schließstellung verzichtet werden.

Nach einer vorteilhaften Weiterbildung der Erfindung ist vorgesehen, dass der Antrieb über ein Steuerventil steuerbar ist, wobei das Steuerventil zwischen einer die Druckluft aus dem Druckluftbehälter dem Antrieb zuführenden ersten Schaltstellung und einer die Zuführung der Druckluft zum Antrieb blockierenden zweiten Schaltstellung verstellbar ist. Vorzugsweise sind die erste Schaltstellung des Steuerventils der Öffnungsstellung des Auslassventils und die zweite Schaltstellung der Schließstellung des Auslassventils zugeordnet. Das Steuerventil ist bevorzugt derart gebildet, dass in der ersten Schaltstellung die in dem Druckluftbehälter vorhandene Druckluft durch das Steuerventil zur Verstellung des Auslassventils von der Schließstellung in die Öffnungsstellung an den pneumatischen Antrieb geleitet wird. Weiter ist das Steuerventil bevorzugt derart gebildet, dass in der zweiten Schaltstellung die Zuführung der Druckluft aus dem Druckluftbehälter an den Antrieb verhindert und/oder blockiert wird. Durch das Steuerventil ist der Antrieb zur Verstellung des Auslassventils zwischen der Öffnungs- und der Schließstellung auf einfache und zuverlässige Weise antreibbar.

Nach einer vorteilhaften Ausgestaltung der Erfindung ist vorgesehen, dass das Steuerventil derart ausgebildet ist, dass die Druckluft in der zweiten Schaltstellung aus dem Antrieb abgeleitet wird. Besonders bevorzugt ist das Steuerventil über eine erste Ableitung mit einem Volumen außerhalb des Druckluftbehälters verbunden, um die Druckluft aus dem Antrieb nach dort abzuleiten, um so die Rückstellung zu ermöglichen. Das außerhalb des Druckluftbehälters angeordnete Volumen kann bspw. ein Behälter und/oder eine Leitung sein, die abgeschlossen oder bevorzugt gegenüber der Umgebung des Druckluftbehälters offen sind. Bevorzugt ist das Steuerventil zumindest als 3/2-Wege-Ventil, d.h. mit mindestens drei Anschlüssen und mindestens zwei Schaltstellungen ausgebildet. Über die Anschlüsse ist das vorteilhaft als 3/2-Wegeventil ausgebildete Steuerventil bevorzugt mit dem Antrieb, der ersten Ableitung und einem die Druckluft aufnehmenden Innenraum des Druckluftbehälters verbunden.

Das Steuerventil ist beispielsweise als pneumatisches oder mechanisches Steuerventil gebildet. Besonders bevorzugt ist jedoch vorgesehen, dass das Steuerventil als elektrisches Steuerventil ausgebildet ist. Vorzugsweise ist das Steuerventil als Magnetventil ausgebildet. Ferner ist das Steuerventil bevorzugt über eine Kabelverbindung mit einer externen Steuereinheit zum Verstellen zwischen der ersten und der zweiten Schaltstellung verbunden. Durch die vorteilhafte Ausgestaltung des Steuerventils wird eine besonders einfache und zuverlässige Verstellung des Antriebs gewährleistet.

Die Steuereinheit ist vorzugsweise als programmierbare Einheit, z.B. als Computer oder SPS gebildet. Bevorzugt weist die Vorrichtung wenigstens ein, besonders bevorzugt mehrere Sensorelemente zur Erfassung von Sensorsignalen, wie beispielsweise des Drucks in dem Druckluftbehälter oder des Drucks in einem nachstehend beschriebenen Druckluftspeicher auf. Das oder die Sensorelemente stehen mit der Steuereinheit zur Weiterleitung der erfassten Daten, beispielsweise an eine übergeordnete Servereinheit in Verbindung. Die Sensorelemente sind beispielsweise in dem Druckluftbehälter oder dem Druckluftspeicher angeordnet. Die Steuereinheit steht bevorzugt wenigstens mit dem Steuerventil zum Steuern des pneumatischen Antriebs in Verbindung. Bevorzugt ist die Steuereinheit derart gebildet, dass sie in Abhängigkeit von Sensorsignalen ein vorgebbares Programm ausführt. Das vorgebbare Programm weist bevorzugt Einstellungsmöglichkeiten für die Dauer des Druckluftimpulses auf. Ferner ist die Steuereinheit bevorzugt mit dem Kompressor zum Befüllen des Druckluftspeichers über die Zuführleitung verbunden.

Gemäß der Erfindung ist vorgesehen, dass der Antrieb und/oder das Steuerventil innerhalb des Druckluftbehälters angeordnet sind. Zudem kann das Auslassventil innerhalb des Druckluftbehälters angeordnet sein. Bevorzugt sind zumindest der Antrieb und das Steuerventil in dem Druckluftbehälter angeordnet, um die Druckluft schnell und zuverlässig zum Antreiben des pneumatischen Antriebs und zum Erzeugen des Druckluftimpulses einzusetzen. Darüber hinaus ermöglicht die Anordnung des Antriebs und/oder des Auslassventils und/oder des Steuerventils in dem Druckluftbehälter, insbesondere in dem Innenraum des Druckluftbehälters eine besonders kompakte Bauweise für die Vorrichtung sowie auf einfache Weise einen zuverlässigen Schutz des Antriebs und/oder des Auslassventils und/oder des Steuerventils vor der Umgebung.

Nach einer äußerst vorteilhaften Weiterbildung der Erfindung ist vorgesehen, dass die Vorrichtung einen mit dem Druckluftbehälter und/oder dem Auslassventil verbundenen Druckluftspeicher aufweist. Der Druckluftspeicher ist zum Speichern von Druckluft gebildet und bevorzugt über die Zuführleitung mit Druckluft befüllbar. Die Zuführleitung kann bspw. sowohl den Druckluftspeicher als auch den Druckluftbehälter direkt versorgen, oder der Druckluftbehälter kann zum Befüllen mit Druckluft mittelbar über die Verbindung mit dem Druckluftspeicher mit der Zuführleitung verbunden sein. Bevorzugt ist der Druckluftbehälter über eine erste Zwischenleitung mit dem Druckluftspeicher verbunden. Das Auslassventil ist zur Abgabe des Druckluftimpulses bevorzugt über eine zweite Zwischenleitung mit dem Druckluftspeicher verbunden. Über die Verbindung des Druckluftbehälters und/oder des Auslassventils mit dem Druckluftspeicher wird die in dem Druckluftbehälter und dem Druckluftspeicher vorhandene Druckluft zum Antreiben des Antriebs und zum Erzeugen des Druckluftimpuls über das Auslassventil an den Ausgang verwendet. Ferner sind die Zwischenleitungen bevorzugt absperrbar an dem Druckluftbehälter und/oder dem Druckluftspeicher angeordnet. Hierbei wird unter absperrbar verstanden, dass die Zwischenleitungen jeweils ein Ventil und/oder einen Verschluss aufweisen, der bevorzugt derart gebildet ist, dass die Zwischenleitungen zum Trennen des Druckluftbehälters von dem Druckluftspeicher gasdicht verriegelbar sind. Der vorteilhaft vorgesehene Druckluftspeicher ermöglicht eine Erweiterung des gespeicherten Druckluftvolumens, wodurch die Vorrichtung für einen längeren Zeitraum ohne die Versorgung über die Zuführleitung betreibbar ist. Darüber hinaus ermöglicht insbesondere die Verbindung des Druckluftbehälters mit dem Druckluftspeicher über die Zwischenleitungen eine einfache und kurzzeitige Wartung des pneumatischen Antriebs und/oder des Steuerventils.

Die Vorrichtung zum Erzeugen des Druckluftimpulses, insbesondere der Druckluftbehälter und/oder der Druckluftspeicher, sind bevorzugt entfernt von der Druckluftquelle und/oder besonders bevorzugt in der Nähe eines Verbrauchers, insbesondere einer Filtereinheit angeordnet. Dies ermöglicht einen Einsatz an unzugänglichen Stellen wie bspw. unter Wasser. Hierbei kann unter "entfernt angeordnet" bspw. verstanden werden, dass die Vorrichtung, insbesondere der Druckluftbehälter und/oder der Druckluftspeicher, zu der Druckluftquelle einen Abstand von mindestens 50 m, bevorzugt mindestens 200 m, besonders bevorzugt mindestens 500 m aufweist. Dabei kann die Vorrichtung, insbesondere der Druckluftbehälter und/oder der Druckluftspeicher, auch in noch deutlich größerer Entfernung von bspw. 1 km oder mehr angeordnet sein.

Die Bestandteile der Vorrichtung, d.h. insbesondere Druckluftbehälter, Auslassventil, pneumatischer Antrieb sowie ggfs. Druckluftspeicher sind bevorzugt direkt aneinander bzw. nebeneinander oder zumindest in unmittelbarer Nähe zueinander angeordnet. Der Druckluftspeicher kann auch im Wesentlichen an den Druckluftspeicher angrenzend angeordnet sein, um die Länge der Zwischenleitungen möglichst gering zu halten. Unter "in der Nähe" kann bspw. eine Distanz von maximal 30 m, bevorzugt maximal 10 m, besonders bevorzugt maximal 5 m verstanden werden.

Vorzugsweise ist die Vorrichtung in der Nähe des Verbrauchers, d.h. insbesondere einer zu reinigenden Filtereinheit angeordnet, bspw. in einer Distanz von bevorzugt weniger als 50 m, weiter bevorzugt weniger als 10 m.

Nach einer vorteilhaften Weiterbildung der Erfindung ist vorgesehen, dass der pneumatische Antrieb einen ersten Arbeitsraum und einen durch ein Verstellelement von dem ersten Arbeitsraum getrennten zweiten Arbeitsraum aufweist, wobei das Verstellelement zur Verstellung des Auslassventils zwischen der Öffnungsstellung und der Schließstellung durch Beaufschlagung des ersten oder zweiten Arbeitsraums mit der Druckluft bewegt wird. Das Verstellelement ist bevorzugt derart im Inneren des Antriebs angeordnet, dass die Arbeitsräume für die Druckluft undurchlässig voneinander getrennt sind. Bevorzugt ist der pneumatische Antrieb als Klappenantrieb ausgebildet, wobei besonders bevorzugt die Bewegung zumindest eines als Klappe ausgebildeten Verstellelements in dem Antrieb die Verstellung des Auslassventils zwischen der Schließ- und der Öffnungsstellung bewirkt. In der ersten Schaltstellung des Steuerventils wird vorzugsweise der erste Arbeitsraum mit der Druckluft aus dem Druckluftbehälter beaufschlagt, sodass das Verstellelement aufgrund der Volumenvergrößerung des ersten Arbeitsraums und der damit verbundenen Volumenverkleinerung des zweiten Arbeitsraums bewegt wird. Die mit der Volumenveränderung der Arbeitsräume einhergehende Bewegung des Verstellelements bewirkt die Verstellung des Auslassventils zwischen der Schließstellung in die Öffnungsstellung. Das Auslassventil ist beispielsweise durch ein Beaufschlagen des zweiten Arbeitsraums und der dadurch bewirkten Bewegung des Verstellelements zwischen der Öffnungsstellung und der Schließstellung verstellbar. Bevorzugt bewirkt jedoch die vorteilhafte Vorspannung des Antriebs in Richtung auf die Schließstellung durch ein an dem Verstellelement angeordnetes Federelement eine Verstellung des Auslassventils von der Öffnungsstellung in die Schließstellung. Durch die vorteilhafte Ausgestaltung des pneumatischen Antriebs wird das Auslassventil zuverlässig zum Erzeugen des Druckluftimpulses mittels der in dem Druckluftbehälter vorhandenen Druckluft zwischen der Schließstellung und der Öffnungsstellung verstellt.

Nach einer vorteilhaften Ausgestaltung der Erfindung ist vorgesehen, dass der pneumatische Antrieb zwei den ersten Arbeitsraum jeweils von einem Teilarbeitsraum trennende Verstellelemente aufweist und der zweite Arbeitsraum durch die Teilarbeitsräume gebildet ist. Die Verstellelemente sind im Abstand voneinander angeordnet, wobei der erste Arbeitsraum zwischen den Verstellelementen angeordnet ist. Die den zweiten Arbeitsraum bildenden Teilarbeitsräume sind jeweils durch die Verstellelemente von dem ersten Arbeitsraum getrennt. Durch ein Beaufschlagen des ersten Arbeitsraums werden die Verstellelemente zur Verstellung des Auslassventils von der Schließstellung in die Öffnungsstellung abstandsvergrößernd voneinander wegbewegt. Hierbei wird unter abstandsvergrößernd die Entfernung des Abstands zwischen den Verstellelementen im ersten Arbeitsraum verstanden. Bevorzugt ist zur vorteilhaften Vorspannung, insbesondere Federvorspannung des Antriebs an den Verstellelementen jeweils ein Federelement angeordnet, wobei die Federelemente jeweils in einem Teilarbeitsraum angeordnet sind. Die vorteilhafte Ausgestaltung des pneumatischen Antriebs ermöglicht ein besonders zuverlässiges Verstellen des Auslassventils zwischen der Öffnungs- und der Schließstellung zum Erzeugen des Druckluftimpulses.

Die Vorrichtung zum Erzeugen des Druckluftimpulses ist als Teil des Systems zum Spülen einer unterhalb der Flüssigkeitsoberfläche, insbesondere einer Wasseroberfläche angeordneten Filtereinheit besonders bevorzugt über den Ausgang mit der Filtereinheit verbunden. Die Vorrichtung und/oder die Filtereinheit sind bevorzugt am Meeresboden angeordnet. Nach einer vorteilhaften Weiterbildung der Erfindung ist daher vorgesehen, dass die Vorrichtung ein offenes Entlüftungsvolumen zur Entlüftung des pneumatischen Antriebs aufweist, wobei das Entlüftungsvolumen derart mit dem Antrieb und/oder dem Steuerventil verbunden ist, dass der zweite Arbeitsraum des Antriebs beim Öffnen des Auslassventils und der erste Arbeitsraum des Antriebs beim Schließen des Auslassventils entlüftet wird. Das Steuerventil ist vorzugsweise über die erste Ableitung mit dem Entlüftungsvolumen verbunden. Alternativ oder zusätzlich sind der Antrieb, insbesondere der zweite Arbeitsraum, bevorzugt die den zweiten Arbeitsraum bildenden Teilarbeitsräume über eine zweite Ableitung mit dem Entlüftungsvolumen verbunden. Bei dem in der ersten Schaltstellung angeordneten Steuerventil und dem in der Öffnungsstellung angeordneten Auslassventil wird die Luft aus dem zweiten Arbeitsraum an das Entlüftungsvolumen abgeleitet. Weiter wird bei dem in der zweiten Schaltstellung angeordneten Steuerventil die Luft aus dem ersten Arbeitsraum an das Entlüftungsvolumen abgeleitet, wobei die Verstellelemente durch die Federelemente zueinander bewegt und dadurch das Auslassventil von der Öffnungsstellung in die Schließstellung verstellt wird.

Das Entlüftungsvolumen ist bevorzugt als offener Behälter ausgebildet, der unter einem Außendruck und/oder Umgebungsdruck außerhalb des Druckluftbehälters steht. Daher ist das Entlüftungsvolumen besonders bevorzugt größer als ein maximales Volumen des zweiten Arbeitsraums ausgebildet, um ein Eindringen von Flüssigkeit, insbesondere Meerwasser in den zweiten Arbeitsraum zu verhindern. Alternativ oder zusätzlich weist das Entlüftungsvolumen bevorzugt eine Membran zum Trennen der Flüssigkeit von der Druckluft auf.

Besonders bevorzugt weist der Druckluftbehälter einen Innendruck mit einer Druckdifferenz von mindestens 1 bar, bevorzugt mindestens 2,5 bar, besonders bevorzugt mindestens 6 bar zu dem Außendruck außerhalb des Druckluftbehälters auf. Hierbei wird unter der Druckdifferenz bevorzugt der Betrag verstanden, mit dem der Innendruck über dem Außendruck liegt. Weiter weist der Druckluftbehälter bevorzugt einen Innendruck mit einer Druckdifferenz von maximal 11 bar, bevorzugt maximal 8 bar, besonders bevorzugt maximal 7 bar zu dem Außendruck auf. Beispielsweise weist der Druckluftbehälter einen Innendruck von 2,5 bar - 8 bar auf.

Nachfolgend wird ein Ausführungsbeispiel der Erfindung anhand von Zeichnungen beschrieben. Dabei zeigen:
- Fig.1a: in schematischer Ansicht ein System zum Spülen einer unterhalb einer Wasseroberfläche angeordneten Filtereinheit, mit einer ein in einer Schließstellung angeordnetes Auslassventil aufweisenden Vorrichtung zum Erzeugen eines Druckluftimpulses;
- Fig.1b: in schematischer Ansicht das System von Fig.1a mit der das in einer Öffnungsstellung angeordnete Auslassventil aufweisenden Vorrichtung zum Erzeugen eines Druckluftimpulses;
- Fig. 2a: in schematischer Ansicht die Vorrichtung zum Erzeugen eines Druckluftimpulses von Fig. 1a - 1b mit dem in der Schließstellung angeordneten Auslassventil;
- Fig. 2b: in schematischer Ansicht die Vorrichtung zum Erzeugen eines Druckluftimpulses von Fig. 2a mit dem in der Öffnungsstellung angeordneten Auslassventil;
- Fig.3a: in schematischer Ansicht eine zweite Ausführungsform einer Vorrichtung zum Erzeugen eines Druckluftimpulses mit einem in der Schließstellung angeordneten Auslassventil;
- Fig.3b: in schematischer Ansicht die Vorrichtung von Fig. 3a mit dem in der Öffnungsstellung angeordneten Auslassventil;
- Fig.4a: in schematischer Ansicht eine dritte Ausführungsform einer Vorrichtung zum Erzeugen eines Druckluftimpulses mit einem in der Schließstellung angeordneten Auslassventil und
- Fig.4b: in schematischer Ansicht die Vorrichtung von Fig. 4a mit dem in der Öffnungsstellung angeordneten Auslassventil.

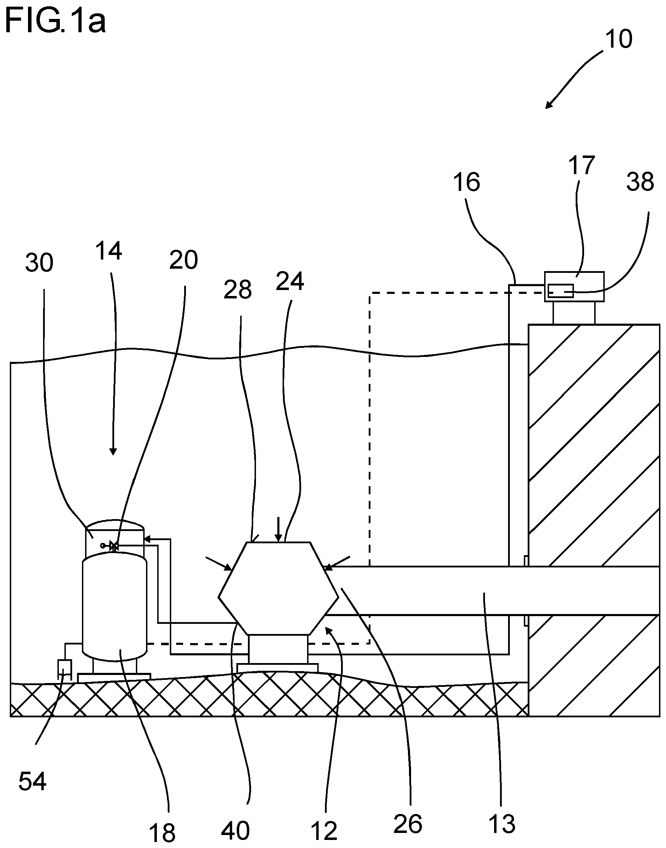

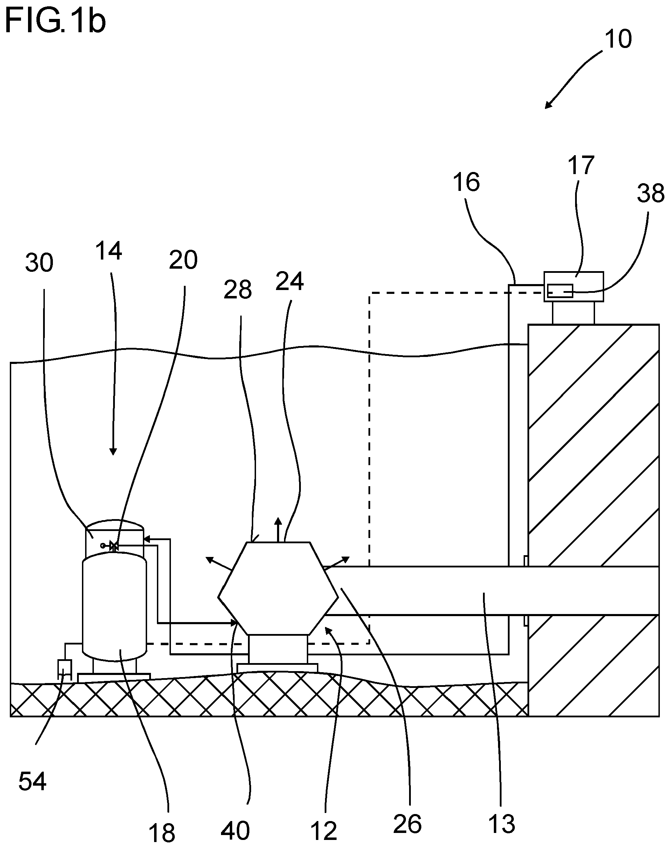

In Figur 1a und 1b ist in schematischer Ansicht ein System 10 zum Spülen einer unterhalb einer Wasseroberfläche angeordneten Filtereinheit 12, mit einer Vorrichtung 14 zum Erzeugen eines gegen die Strömungsrichtung des Wassers gerichteten Druckluftimpulses und einer unterhalb der Wasseroberfläche angeordneten Filtereinheit 12 dargestellt.

Die von einem Einlass 24 bis zu einem Auslass 26 mit Wasser durchströmte Filtereinheit 12 weist mindestens eine Filterfläche 28 zum Trennen von Verunreinigungen, z.B. Algen, Dreck oder Unrat, von dem Wasserstrom auf (siehe Fig. 1a). Durch eine Saugleitung 13 wird das Wasser durch die Filterfläche 28 hindurch angesaugt und in Richtung Festland befördert.

Die Vorrichtung 14 zum Erzeugen eines Druckluftimpulses weist einen über eine Zuführleitung 16 mit Druckluft befüllbaren Druckluftbehälter 18 und ein Auslassventil 20 zum Abgeben des Druckluftimpulses über einen Ausgang 40 an die Filtereinheit 12 auf.

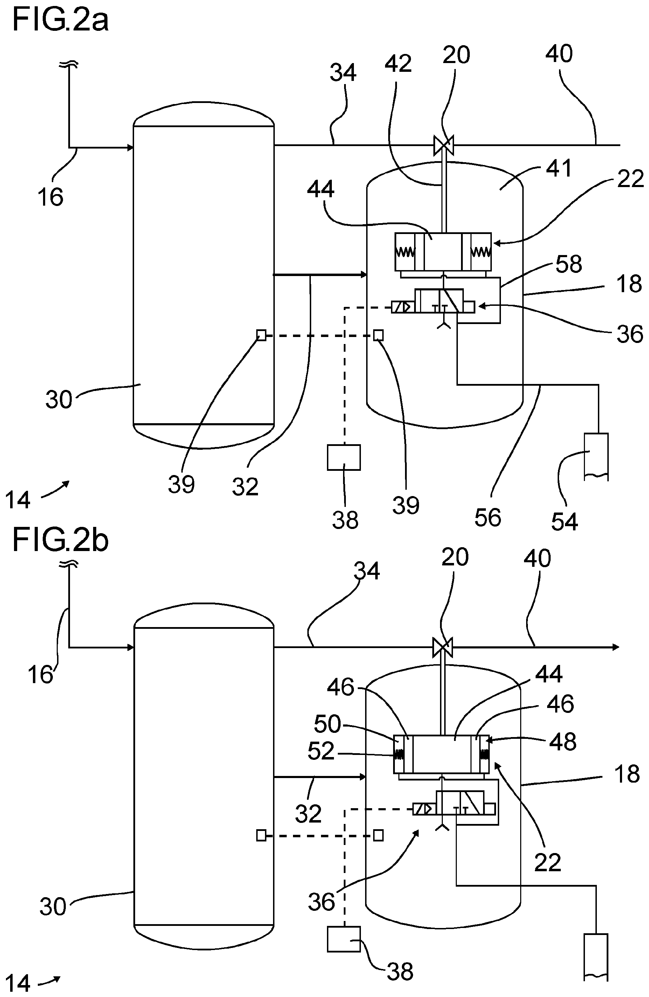

In Fig. 2a und 2b ist die Vorrichtung 14 zum Erzeugen des Druckluftimpulses dargestellt. Die Vorrichtung 14 weist einen mit dem Druckluftbehälter 18 und dem Auslassventil 20 verbundenen Druckluftspeicher 30 auf. Die Zuführleitung 16 verbindet einen Druckluftkompressor 17 mit dem Druckluftspeicher 30 (siehe Fig.1a und 1b). Zum Befüllen mit Druckluft ist der Druckluftbehälter 18 über eine erste Zwischenleitung 32 mit dem Druckluftspeicher 30 verbunden.

Zum Öffnen und Schließen des Auslassventils 20 ist ein pneumatischer Antrieb 22 vorgesehen. Das Auslassventil 20 ist durch diesen Antrieb 22 zwischen einer den Druckluftimpuls abgebenden Öffnungsstellung und einer die Abgabe von Druckluft blockierenden Schließstellung verstellbar. Der pneumatische Antrieb 22 ist dabei innerhalb des Druckluftbehälters 18 angeordnet.

Zur Abgabe der Druckluft aus dem Druckluftspeicher 30 als Impuls an die Filtereinheit 12 ist das Auslassventil 20 über eine zweite Zwischenleitung 34 mit dem Druckluftspeicher 30 verbunden. Die Zwischenleitungen 32, 34 sind jeweils zur wartungsbedingten Entnahme des Druckluftbehälters 18 oder des Druckluftspeichers 30 absperrbar an dem Druckluftbehälter 18 oder dem Auslassventil 20 sowie dem Druckluftspeicher 30 angeordnet.

Zur Steuerung des pneumatischen Antriebs 22 weist die Vorrichtung 14 ein innerhalb des Druckluftbehälters 18 angeordnetes elektrisches Steuerventil in Form eines 3/2-Wege-Magnetventils 36 auf. Das Magnetventil 36 ist zwischen einer die Druckluft aus dem Druckluftbehälter 18 dem Antrieb 22 zuführenden, in Fig. 2b dargestellten, ersten Schaltstellung und einer die Zuführung der Druckluft zum Antrieb 22 blockierenden, in Fig. 2a dargestellten, zweiten Schaltstellung verstellbar. Zum Verstellen zwischen den Schaltstellungen ist das Magnetventil 36 über eine Kabelverbindung mit einer entfernten Steuereinheit 38 (siehe auch Fig. 1a, 1b) verbunden.

Die Steuereinheit 38 ist als programmierbare Einheit gebildet und mit Sensorelementen 39 zur Erfassung von Sensorsignalen verbunden, hier des Drucks in dem Druckluftbehälter 18 und des Drucks in dem Druckluftspeicher 30. Die Sensorelemente 39 sind hierzu jeweils in dem Druckluftbehälter 18 und dem Druckluftspeicher 30 angeordnet und stehen mit der Steuereinheit 38 zur Weiterleitung der erfassten Daten in Verbindung. Darüber hinaus steht die Steuereinheit 38 mit dem Magnetventil 36 zum Steuern des pneumatischen Antriebs 22 in Verbindung. Ferner ist die Steuereinheit 38 zum Ausführen eines vorgebbaren Programms in Abhängigkeit von den Sensorsignalen ausgebildet. Das vorgebbare Programm weist Einstellungsmöglichkeiten für die Dauer des Druckluftimpulses auf. Zusätzlich ist die Steuereinheit 38 mit dem Kompressor 17 zum Befüllen des Druckluftspeichers 30 und des Druckluftbehälters 18 über die Zuführleitung 16 verbunden.

Der pneumatische Antrieb 22 und das Magnetventil 36 sind in einem Innenraum 41 des Druckluftbehälters 18 angeordnet. Das Auslassventil 20 ist in dieser Ausführungsform außerhalb des Druckluftbehälters 18 angeordnet und über ein Rotationselement in Form einer Antriebswelle 42 mit dem pneumatischen Antrieb 22 verbunden. Das Verstellen des Auslassventils 20 zwischen der Schließstellung und der Öffnungsstellung oder umgekehrt wird über eine Rotationsbewegung der Antriebswelle 42 bewirkt.

Der pneumatische Antrieb 22 ist als Klappenantrieb 22 ausgebildet und weist (siehe Fig. 2b) einen ersten Arbeitsraum 44 sowie einen durch als Klappen 46 ausgebildete Verstellelemente von dem ersten Arbeitsraum 44 getrennten zweiten Arbeitsraum 48 auf. Die Klappen 46 sind derart im Inneren des Klappenantriebs 22 angeordnet, dass die Arbeitsräume 44, 48 für die Druckluft undurchlässig voneinander getrennt sind.

Die Klappen 46 sind im Abstand voneinander angeordnet, wobei der erste Arbeitsraum 44 zwischen den Klappen 46 angeordnet ist und der zweite Arbeitsraum 48 durch zwei jeweils mittels der Klappen 46 von dem ersten Arbeitsraum 44 getrennte Teilarbeitsräume 50 gebildet ist. Zum Vorspannen des Antriebs 22 in Richtung auf die Schließstellung ist an den Klappen 46 jeweils ein Federelement 52 angeordnet, wobei die Federelemente 52 jeweils in einem der Teilarbeitsräume 50 angeordnet sind.

Die Vorrichtung 14 weist ferner ein offenes Entlüftungsvolumen 54 zur Entlüftung des Klappenantriebs 22 auf. Das Entlüftungsvolumen 54 ist über eine erste Ableitung 56 mit dem Magnetventil 36 und über dieses mittelbar mit dem ersten Arbeitsraum 44 sowie über eine zweite Ableitung 58 mit den Teilarbeitsräumen 50, d.h. dem zweiten Arbeitsraum 48, verbunden. Um ein Eindringen von Meerwasser in den zweiten Arbeitsraum 48 zu verhindern, ist das Entlüftungsvolumen 54 größer als ein maximales Volumen des zweiten Arbeitsraums 48 ausgebildet. In einer alternativen Ausgestaltung kann das Entlüftungsvolumen eine Membran zum Trennen der Flüssigkeit von der Druckluft aufweisen.

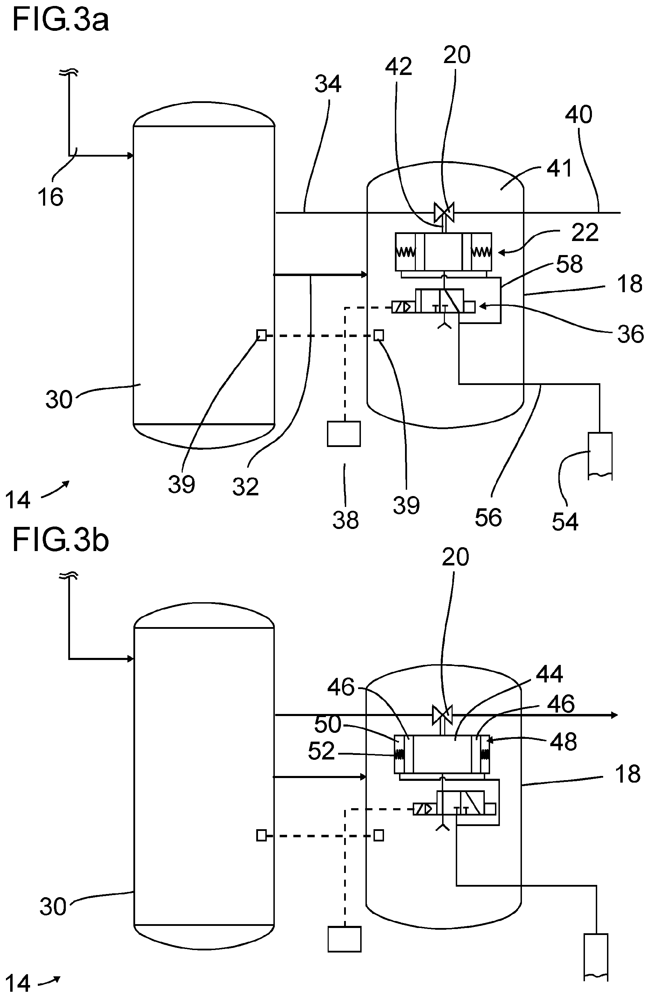

Für die in Fig. 3a und 3b dargestellte Vorrichtung 14, die eine zweite Ausführungsform der Vorrichtung 14 darstellt, werden für gleiche Bauteile gleiche Bezugszeichen verwendet. Die Vorrichtung 14 unterscheidet sich von der Vorrichtung 14 gemäß Fig. 1a- 2b dadurch, dass das Auslassventil 20 gemeinsam mit dem Steuerventil (Magnetventil) 36 und dem pneumatischen Antrieb 22 innerhalb des Druckluftbehälters 18 angeordnet ist.

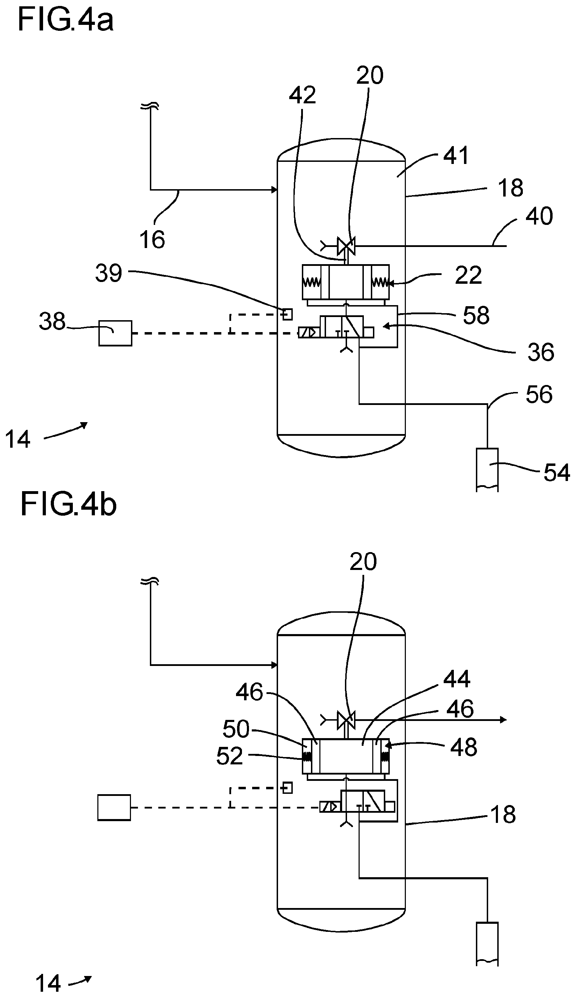

In Fig. 4a und 4b ist die Vorrichtung 14 gezeigt, die eine dritte Ausführungsform der Vorrichtung 14 darstellt. Die Vorrichtung 14 unterscheidet sich von der Vorrichtung 14 gemäß Fig.1a-2b und der Vorrichtung 14 gemäß Fig. 3a und 3b dadurch, dass der Druckluftbehälter 18 und das Auslassventil 20 nicht mit einem separaten Druckluftspeicher 30 verbunden sind, sondern der Druckluftbehälter 18 gleichzeitig als Druckluftspeicher dient, innerhalb dessen das Auslassventil 20 , das Steuerventil (Magnetventil) 36 und der pneumatische Antrieb 22 angeordnet sind.

Im Betrieb der drei Ausführungsformen der Vorrichtung 14 zum Spülen der unterhalb der Wasseroberfläche angeordneten Filtereinheit 12 wird der Druckluftbehälter 18 im Fall der Vorrichtung gemäß Fig. 4a und 4b unmittelbar über die mit dem Kompressor 17 verbundene Zuführleitung 16 oder im Fall der Vorrichtungen gemäß Fig. 2a -3b mittelbar über die mit dem Druckluftspeicher 30 verbundene Zwischenleitung 32 mit Druckluft befüllt. Der Druckluftbehälter 18 und der Druckluftspeicher 30 weisen einen Innendruck mit einer Druckdifferenz von 2,5 - 8 bar zu einem Außendruck außerhalb des Druckluftbehälters 18 auf. Das Magnetventil 36 ist in der in den Fig. 2a, 3a und 4a dargestellten zweiten Schaltstellung angeordnet, sodass eine Zuführung der Druckluft aus dem Druckluftbehälter 18 an den Klappenantrieb 22 verhindert und/oder blockiert wird. Durch die Federelement 52 werden die Klappen 46 jeweils in Richtung auf die andere Klappe 46 und der Klappenantrieb 22 in Richtung auf die Schließstellung des Auslassventils 20 vorgespannt.

Zum Einleiten des Erzeugens des Druckluftimpulses wird das Magnetventil 36 mittels der Steuereinheit 38 von der zweiten Schaltstellung in die in den Fig. 2b, 3b und 4b dargestellte erste Schaltstellung verstellt. Die in dem Druckluftbehälter 18 vorhandene Druckluft wird durch das Magnetventil 36 in den ersten Arbeitsraum 44 des Klappenantriebs 22 geleitet. Zum Verstellen des Auslassventils 20 zwischen der in den Fig. 1b, 2b, 3b und 4b dargestellten Schließstellung und der in den Fig. 1a, 2a, 3a und 4a dargestellten Öffnungsstellung werden die Klappen 46 durch Beaufschlagen des ersten Arbeitsraums 46 mit der Druckluft bewegt. Hierbei werden die Teilarbeitsräume 50 über die Verbindung mit dem Entlüftungsvolumen 54 mittels der zweiten Ableitung 58 entlüftet. Durch das Beaufschlagen des ersten Arbeitsraums 44 werden die Klappen46 abstandsvergrößernd voneinander wegbewegt, sodass die Antriebswelle 42 zur Verstellung des Auslassventils 20 von der Schließstellung in die Öffnungsstellung angetrieben wird. Die Druckluft aus dem Druckluftspeicher 30 und/oder dem Druckluftbehälter 18 strömt durch das Auslassventil 20 und wird über einen Ausgang 40 an die Filtereinheit 12 geleitet. Der erzeugte Druckluftimpuls wird gegen die Strömungsrichtung des Wassers gerichtet in die Filtereinheit 12 eingeleitet, sodass die Filterfläche 28 der Filtereinheit 12 von den Verunreinigungen befreit wird.

Anschließend wird das Magnetventil 36 mittels der Steuereinheit 38 erneut von der ersten Schaltstellung in die zweite Schaltstellung verstellt. Der erste Arbeitsraum 44 wird über die Verbindung mit dem Magnetventil 36 und dessen Verbindung mit dem Entlüftungsvolumen 54 mittels der ersten Ableitung 56 entlüftet. Durch die Federelemente 52 werden die Klappen 46 zueinander und das Auslassventil 20 von der Öffnungsstellung in die Schließstellung verstellt.

Alle in Verbindung mit einzelnen Ausführungsformen der Erfindung erläuterten Merkmale können in unterschiedlicher Kombination für die Vorrichtung 14 zum Erzeugen eines Druckluftimpulses, das System 10 zum Spülen der Filtereinheit 12 sowie das Verfahren zum Spülen der Filtereinheit 12 vorgesehen sein, um deren vorteilhafte Wirkungen zu realisieren, auch wenn diese zu unterschiedlichen Ausführungsformen beschrieben worden sind. Beispielsweise ist eine Vorrichtung 14 zum Erzeugen eines Druckluftimpulses auch zur Spülung mehrerer Filtereinheiten 12 einsetzbar, sodass das System 10 beispielsweise zwei Filtereinheiten 12 aufweist.

Der Schutzbereich der vorliegenden Erfindung ist durch die Ansprüche gegeben und wird durch die in der Beschreibung erläuterten oder in den Figuren gezeigten Merkmale nicht beschränkt.

### Bezugszeichenliste

- 10: System zum Spülen einer Filtereinheit
- 12: Filtereinheit
- 13: Saugleitung
- 14: Vorrichtung zum Erzeugen eines Druckluftimpulses
- 16: Zuführleitung
- 17: Kompressor
- 18: Druckluftbehälter
- 20: Auslassventil
- 22: pneumatischer Antrieb/Klappenantrieb
- 24: Einlass der Filtereinheit
- 26: Auslass der Filtereinheit
- 28: Filterfläche
- 30: Druckluftspeicher
- 32: erste Zwischenleitung
- 34: zweite Zwischenleitung
- 36: Steuerventil (3/2- Wege-Magnetventil)
- 38: Steuereinheit
- 39: Sensorelement
- 40: Ausgang
- 41: Innenraum
- 42: Rotationselement/Antriebswelle
- 44: erster Arbeitsraum
- 46: Verstellelement/Klappe
- 48: zweiter Arbeitsraum
- 50: Teilarbeitsraum
- 52: Federelement
- 54: Entlüftungsvolumen
- 56: erste Ableitung
- 58: zweite Ableitung

## Patentansprüche

1. Vorrichtung zum Erzeugen eines Druckluftimpulses, mit
- einem über eine Zuführleitung (16) mit Druckluft befüllbaren Druckluftbehälter (18),
- einem Auslassventil (20) zum Abgeben des Druckluftimpulses über einen Ausgang (40) und
- einem pneumatischen Antrieb (22) zum Öffnen und Schließen des Auslassventils (20), wobei
- der Antrieb (22) zum Öffnen oder Schließen des Auslassventils (20) mittels der in dem Druckluftbehälter (18) vorhandenen Druckluft antreibbar ist,
- und der Antrieb (22) über ein Steuerventil (36) steuerbar ist,
- und wobei der Antrieb (22) und/oder das Steuerventil (36) innerhalb des Druckluftbehälters (18) angeordnet sind.

2. Vorrichtung nach Anspruch 1, **dadurch gekennzeichnet, dass** das Auslassventil (20) zwischen einer den Druckluftimpuls abgebenden Öffnungsstellung und einer die Abgabe von Druckluft blockierenden Schließstellung verstellbar ist.

3. Vorrichtung nach Anspruch 2, **dadurch gekennzeichnet, dass** der pneumatische Antrieb (22) in Richtung auf die Schließstellung vorgespannt, bevorzugt federvorgespannt ist.

4. Vorrichtung nach einem der vorangehenden Ansprüche, **dadurch gekennzeichnet, dass** das Steuerventil (36) zwischen einer die Druckluft aus dem Druckluftbehälter (18) dem Antrieb (22) zuführenden ersten Schaltstellung und einer die Zuführung der Druckluft zum Antrieb (22) blockierenden zweiten Schaltstellung verstellbar ist.

5. Vorrichtung nach Anspruch 4, **dadurch gekennzeichnet, dass** das Steuerventil (36) derart ausgebildet ist, dass die Druckluft in der zweiten Schaltstellung aus dem Antrieb (22) abgeleitet wird.

6. Vorrichtung nach Anspruch 4 oder 5, **dadurch gekennzeichnet, dass** das Steuerventil als elektrisches Steuerventil (36) ausgebildet ist.

7. Vorrichtung nach einem der vorangehenden Ansprüche, **dadurch gekennzeichnet, dass** das Auslassventil (20) innerhalb des Druckluftbehälters (18) angeordnet ist.

8. Vorrichtung nach einem der vorangehenden Ansprüche, **gekennzeichnet durch** einen mit dem Druckluftbehälter (18) und/oder dem Auslassventil (20) verbundenen Druckluftspeicher (30).

9. Vorrichtung nach einem der vorangehenden Ansprüche, **dadurch gekennzeichnet, dass** der pneumatische Antrieb (22) einen ersten Arbeitsraum (44) und einen durch ein Verstellelement (46) von dem ersten Arbeitsraum (44) getrennten zweiten Arbeitsraum (48) aufweist, wobei das Verstellelement (46) zur Verstellung des Auslassventils (20) zwischen der Öffnungsstellung und der Schließstellung durch Beaufschlagung des ersten oder zweiten Arbeitsraums (44, 48) mit der Druckluft bewegt wird.

10. Vorrichtung nach Anspruch 9, **dadurch gekennzeichnet, dass** der pneumatische Antrieb (22) zwei den ersten Arbeitsraum (44) jeweils von einem Teilarbeitsraum (50) trennende Verstellelemente (46) aufweist und der zweite Arbeitsraum (48) durch die Teilarbeitsräume (50) gebildet ist.

11. Vorrichtung nach Anspruch 9 oder 10, **gekennzeichnet durch** ein offenes Entlüftungsvolumen (54) zur Entlüftung des pneumatischen Antriebs (22), wobei das Entlüftungsvolumen (54) derart mit dem Antrieb (22) und/oder dem Steuerventil (36) verbunden ist, dass der zweite Arbeitsraum (48) des Antriebs (22) beim Öffnen des Auslassventils (20) und der erste Arbeitsraum (44) des Antriebs (22) beim Schließen des Auslassventils (20) entlüftet wird.

12. Vorrichtung nach Anspruch 11, **dadurch gekennzeichnet, dass** das Entlüftungsvolumen (54) größer als ein maximales Volumen des zweiten Arbeitsraums (48) ausgebildet ist.

13. System zum Spülen einer in einer Strömungsrichtung von einem Einlass bis zu einem Auslass mit einer Flüssigkeit durchströmten Filtereinheit (12), mit
- der Filtereinheit (12) und
- einer Vorrichtung (14) zum Erzeugen eines gegen die Strömungsrichtung der Flüssigkeit gerichteten Druckluftimpulses nach einem der Ansprüche 1 - 12.

14. Verfahren zum Erzeugen eines Druckluftimpulses, wobei
- ein Druckluftbehälter (18) über eine Zuführleitung (16) mit Druckluft befüllt wird,
- ein Auslassventil (20) zum Ablassen der Druckluft über einen Ausgang (40) durch einen pneumatischen Antrieb (22) für einen vorgebbaren Zeitraum geöffnet wird, wobei
- ein pneumatischer Antrieb (22) zum Öffnen oder Schließen des Auslassventils (40) über ein Steuerventil (36) gesteuert und mittels der in dem Druckluftbehälter (18) vorhandenen Druckluft angetrieben wird
- wobei der Antrieb (22) und/oder das Steuerventil (36) innerhalb des Druckluftbehälters (18) angeordnet sind.

15. Verfahren nach Anspruch 14, **dadurch gekennzeichnet, dass**
- der Druckluftbehälter (18) unterhalb einer Wasseroberfläche angeordnet ist und
- der Druckluftbehälter (18) einen Innendruck mit einer Druckdifferenz von mindestens 1 bar, bevorzugt mindestens 2,5 bar, besonders bevorzugt mindestens 6 bar zu einem Außendruck außerhalb des Druckluftbehälters (18) aufweist.

## Claims

1. Device for generating a compressed air pulse, with
- a compressed air tank (18) that can be filled with compressed air via a supply line (16),
- an outlet valve (20) for emitting the compressed air pulse via an outlet (40) and
- a pneumatic drive (22) for opening and closing the outlet valve (20), wherein
- the drive (22) for opening or closing the outlet valve (20) can be driven by means of the compressed air present in the compressed air tank (18),
- and the drive (22) can be controlled via a control valve (36),
- and wherein the drive (22) and/or the control valve (36) are arranged within the compressed air tank (18).

2. Device according to claim 1, **characterized in that** the outlet valve (20) is adjustable between an open position releasing the compressed air pulse and a closed position blocking the release of compressed air.

3. Device according to claim 2, **characterized in that** the pneumatic drive (22) is biased, preferably spring-biased, in the direction of the closed position.

4. Device according to one of the preceding claims, **characterized in that** the control valve (36) is adjustable between a first switching position supplying the compressed air from the compressed air tank (18) to the drive (22) and a second switching position blocking the supply of compressed air to the drive (22).

5. Device according to claim 4, **characterized in that** the control valve (36) is designed in such a way that the compressed air is discharged from the drive (22) in the second switching position.

6. Device according to claim 4 or 5, **characterized in that** the control valve is designed as an electric control valve (36).

7. Device according to one of the preceding claims, **characterized in that** the outlet valve (20) is arranged inside the compressed air tank (18).

8. Device according to one of the preceding claims, **characterized by** a compressed air storage (30) connected to the compressed air tank (18) and/or the outlet valve (20).

9. Device according to one of the preceding claims, **characterized in that** the pneumatic drive (22) has a first working chamber (44) and a second working chamber (48) separated from the first working chamber (44) by an adjusting element (46), the adjusting element (46) being moved for adjusting the outlet valve (20) between the open position and the closed position by acting on the first or second working chamber (44, 48) with the compressed air.

10. Device according to claim 9, **characterized in that** the pneumatic drive (22) has two adjusting elements (46) each separating the first working chamber (44) from a partial working chamber (50) and the second working chamber (48) is formed by the partial working chambers (50).

11. Device according to claim 9 or 10, **characterized by** an open ventilation volume (54) for venting the pneumatic drive (22), wherein the ventilation volume (54) is connected to the drive (22) and/or the control valve (36) in such a way that the second working chamber (48) of the drive (22) is vented when the outlet valve (20) is opened and the first working chamber (44) of the drive (22) is vented when the outlet valve (20) is closed.

12. Device according to claim 11, **characterized in that** the ventilation volume (54) is designed to be larger than a maximum volume of the second working chamber (48).

13. System for flushing a filter unit (12) through which a liquid flows in a flow direction from an inlet to an outlet, with
- the filter unit (12) and
- a device (14) for generating a compressed air pulse directed against the direction of flow of the liquid according to one of claims 1 - 12.

14. Method of generating a pulse of compressed air, wherein
- a compressed air tank (18) is filled with compressed air via a supply line (16),
- an outlet valve (20) for releasing the compressed air via an outlet (40) is opened by a pneumatic drive (22) for a predeterminable period of time, wherein
- a pneumatic drive (22) for opening or closing the outlet valve (40) is controlled via a control valve (36) and driven by means of the compressed air present in the compressed air tank (18)
- wherein the drive (22) and/or the control valve (36) are arranged within the compressed air tank (18).

15. Method according to claim 14, **characterized in that**
- the compressed air tank (18) is arranged below a water surface and
- the compressed air tank (18) has an internal pressure with a pressure difference of at least 1 bar, preferably at least 2.5 bar, particularly preferably at least 6 bar to an external pressure outside the compressed air tank (18).

## Revendications

1. Dispositif pour générer une impulsion d'air comprimé, comprenant
- un réservoir d'air comprimé (18) pouvant être rempli d'air comprimé par l'intermédiaire d'une conduite d'alimentation (16),
- une soupape d'échappement (20) pour délivrer l'impulsion d'air comprimé via une sortie (40) et
- un entraînement pneumatique (22) pour ouvrir et fermer la soupape d'échappement (20), dans lequel
- l'entraînement (22) pour ouvrir ou fermer la soupape d'échappement (20) peut être entraîné au moyen de l'air comprimé présent dans le réservoir d'air comprimé (18),
- et l'entraînement (22) peut être commandé par une soupape de commande (36),
- et dans lequel l'entraînement (22) et/ou la soupape de commande (36) sont disposés à l'intérieur du réservoir d'air comprimé (18).

2. Dispositif selon la revendication 1, **caractérisé en ce que** la soupape d'échappement (20) est réglable entre une position d'ouverture délivrant l'impulsion d'air comprimé et une position de fermeture bloquant la délivrance d'air comprimé.

3. Dispositif selon la revendication 2, **caractérisé en ce que** l'entraînement pneumatique (22) est précontraint, de préférence précontraint par ressort, en direction de la position de fermeture.

4. Dispositif selon l'une des revendications précédentes, **caractérisé en ce que** la soupape de commande (36) est réglable entre une première position de commutation amenant l'air comprimé du réservoir d'air comprimé (18) à l'entraînement (22) et une deuxième position de commutation bloquant l'amenée de l'air comprimé à l'entraînement (22).

5. Dispositif selon la revendication 4, **caractérisé en ce que** la soupape de commande (36) est conçue de telle sorte que l'air comprimé est évacué de l' entraînement (22) dans la deuxième position de commutation.

6. Dispositif selon la revendication 4 ou 5, **caractérisé en ce que** la soupape de commande est conçue comme une soupape de commande électrique (36).

7. Dispositif selon l'une des revendications précédentes, **caractérisé en ce que** la soupape d'échappement (20) est disposée à l'intérieur du réservoir d'air comprimé (18).

8. Dispositif selon l'une des revendications précédentes, **caractérisé par** un accumulateur pneumatique (30) relié au réservoir d'air comprimé (18) et/ou à la soupape d'échappement (20).

9. Dispositif selon l'une des revendications précédentes, **caractérisé en ce que** l'entraînement pneumatique (22) présente une première chambre de travail (44) et une deuxième chambre de travail (48) séparée de la première chambre de travail (44) par un élément de réglage (46), l'élément de réglage (46) étant déplacé pour régler la soupape d'échappement (20) entre la position d'ouverture et la position de fermeture en alimentant la première ou la deuxième chambre de travail (44, 48) avec l'air comprimé.

10. Dispositif selon la revendication 9, **caractérisé en ce que** l'entraînement pneumatique (22) présente deux éléments de réglage (46) séparant le premier chambre de travail (44) respectivement d'une chambre de travail partiel (50) et le deuxième chambre de travail (48) est formé par les chambres de travail partiels (50).

11. Dispositif selon la revendication 9 ou 10, **caractérisé par** un volume de la désaération (54) pour la purge de l'entraînement pneumatique (22), le volume de la désaération (54) étant relié à l'entraînement (22) et/ou à la soupape de commande (36) de telle sorte que la deuxième chambre de travail (48) de l'actionneur (22) est purgée lors de l'ouverture de la soupape d'échappement (20) et la première chambre de travail (44) de l'entraînement (22) est purgée lors de la fermeture de la soupape d'échappement (20).

12. Dispositif selon la revendication 11, **caractérisé en ce que** le volume de la désaération (54) est plus grand qu'un volume maximal de la deuxième chambre de travail (48).

13. Système de rinçage d'une unité de filtration (12) traversée par un liquide dans une direction d'écoulement allant d'une entrée à une sortie, comprenant
- l'unité de filtration (12) et
- un dispositif (14) pour générer une impulsion d'air comprimé dirigée contre le sens d'écoulement du liquide selon l'une des revendications 1 à 12.

14. Procédé de génération d'une impulsion d'air comprimé, dans lequel
- un réservoir d'air comprimé (18) est rempli d'air comprimé via une conduite d'alimentation (16),
- une soupape d'échappement (20) pour l'évacuation de l'air comprimé par une sortie (40) est ouverte par un entraînement pneumatique (22) pendant une durée pouvant être prédéfinie, où
- un entraînement pneumatique (22) pour ouvrir ou fermer la soupape d'échappement (40) est commandé par une soupape de commande (36) et est entraîné au moyen de l'air comprimé présent dans le réservoir d'air comprimé (18)
- l'entraînement (22) et/ou la soupape de commande (36) étant disposés à l'intérieur du réservoir d'air comprimé (18).

15. Procédé selon la revendication 14, **caractérisé en ce que**
- le réservoir d'air comprimé (18) est situé en dessous d'une surface d'eau et
- le réservoir d'air comprimé (18) présente une pression interne avec une différence de pression d'au moins 1 bar, de préférence d'au moins 2,5 bars, de manière particulièrement préférée d'au moins 6 bars par rapport à une pression externe à l'extérieur du réservoir d'air comprimé (18).
